# EUROPEAN PATENT APPLICATION

(11) **EP 4 799 906 A1**
(43) Date of publication of application: **02.09.2026**
(21) Application number: 24881389.1
(22) Date of filing: 08.10.2024
(51) Int. Cl.: B62D 6/10, B60W 40/09, B60W 40/08, B62D 1/04, B62D 15/02, B60W 50/14, B60W 50/08, G06V 40/10, B60K 28/02

(54) **HANDS OFF DETECTION METHOD AND APPARATUS FOR STEERING WHEEL, AND COMPUTER STORAGE MEDIUM**

(30) Priority: 25.10.2023 CN 202311395577
(71) Applicant: Autoliv Development AB, 44783 Vargarda (SE)
(72) Inventor: WANG, Xueliang, Shanghai 201807 (CN); DAI, Wangjun, Shanghai 201807 (CN); YAO, Yao, Shanghai 201807 (CN); LI, Junwen, Shanghai 201807 (CN); ZHOU, Chengfeng, Shanghai 201807 (CN); FANG, Zhi, Shanghai 201807 (CN)
(86) International application number: PCT/CN2024/123319
(87) International publication number: WO 2025/087023

(57) **Abstract**

Provided are a hands-off detection method and device for a steering wheel, and a computer storage medium. The hands-off detection method for a steering wheel includes: acquiring first information, the first information being one of torque information related to the steering wheel and image information related to the steering wheel and a driver; acquiring second information, the second information being the other one of the torque information and the image information; on the basis of the first information, determining a first sub-result indicating whether hands are off the steering wheel; when the first sub-result indicates hands-off and when the first sub-result indicates hands-on, on the basis of the second information, separately determining a second sub-result indicating whether the hands are off the steering wheel; and on the basis of the first sub-result and the second sub-result, determining a final result indicating whether the hands are off the steering wheel.

## Description

### TECHNICAL FIELD

The present invention relates to a hands-off detection method for a steering wheel, a hands-off detection device for a steering wheel, and a computer storage medium.

### BACKGROUND ART

Hands-off detection (HOD) for a steering wheel is intended to detect whether hands of a driver are off the steering wheel. If the hands of the driver leave the steering wheel for a period of time, an alarm is issued to the driver, thereby improving driving safety.

In the prior art, there are various methods for implementing hands-off detection of the steering wheel, including an image recognition manner or a torque detection manner.

However, the image recognition method is easily affected by unstable illumination, or if detected objects overlap in space, such overlap may be falsely interpreted as physical contact. In a torque sensing manner, an erroneous determination that the hands of the driver are on the steering wheel will be made if another body part of the driver other than the hands is in contact with the steering wheel.

Therefore, the hands-off detection method for a steering wheel in the prior art may cause erroneous determination, resulting in inaccurate detection.

### SUMMARY OF THE INVENTION

An object of the present invention is to provide a hands-off detection method for a steering wheel, a hands-off detection device for a steering wheel, and a computer readable medium, which can improve the accuracy of hands-off detection.

According to an embodiment of the present invention, a hands-off detection method for a steering wheel is provided, comprising:
acquiring first information, the first information being one of torque information related to the steering wheel and image information related to the steering wheel and a driver;
acquiring second information, the second information being the other one of the torque information and the image information;
on the basis of the first information, determining a first sub-result indicating whether hands are off the steering wheel;
when the first sub-result indicates hands-off and when the first sub-result indicates hands-on, on the basis of the second information, separately determining a second sub-result indicating whether the hands are off the steering wheel; and
on the basis of the first sub-result and the second sub-result, determining a final result indicating whether the hands are off the steering wheel.

According to an embodiment of the present invention, the first information is torque information, and the second information is image information; and the step of determining the first sub-result comprises:
establishing a steering system model, and on the basis of the torque information and the steering system model, calculating an estimated torque at a steering wheel end; and
determining whether the estimated torque is greater than a preset torque threshold, the first sub-result indicating hands-on when the estimated torque is greater than the preset torque threshold, and the first sub-result indicating hands-off when the estimated torque is less than or equal to the preset torque threshold.

According to an embodiment of the present invention, the step of determining the second sub-result comprises at least one of the following steps:
determining whether another body part of the driver other than the hands is in contact with the steering wheel;
determining whether the hands are in contact with a rim of the steering wheel; and
determining whether the area of contact between the hands and the rim is greater than a preset area threshold.

According to an embodiment of the present invention, when the first sub-result indicates hands-off, the step of determining the second sub-result comprises:
determining whether the other body part is in contact with the steering wheel;
determining whether the hands are in contact with the rim; and
determining whether the area of contact is greater than the preset area threshold; and
when the first sub-result indicates hands-on, the step of determining the second sub-result comprises determining whether the area of contact is greater than the preset area threshold, wherein:
the second sub-result indicates hands-on when the area of contact is greater than the preset area threshold, and the second sub-result indicates hands-off when the area of contact is less than or equal to the preset area threshold.

According to an embodiment of the present invention, the step of determining the final result comprises:
determining the final result as hands-on if the first sub-result indicates hands-on and the second sub-result indicates hands-on;
determining the final result as hands-off if the first sub-result indicates hands-on and the second sub-result indicates hands-off;
determining the final result as hands-on if the first sub-result indicates hands-off and the second sub-result indicates hands-on; and
determining the final result as hands-off if the first sub-result indicates hands-off and the second sub-result indicates hands-off.

According to an embodiment of the present invention, the hands-off detection method further comprises:
acquiring a vehicle speed; and
determining whether the vehicle speed is less than a preset vehicle speed threshold, and skipping the step of determining the first sub-result on the basis of the torque information if the vehicle speed is less than the preset vehicle speed threshold.

According to an embodiment of the present invention, the first information is image information, and the second information is torque information; and the step of determining the first sub-result comprises at least one of the following steps:
determining whether another body part of the driver other than the hands is in contact with the steering wheel;
determining whether the hands are in contact with the rim; and
determining whether the area of contact between the hands and the rim is greater than a preset area threshold.

According to an embodiment of the present invention, the hands-off detection method further comprises acquiring the vehicle speed and determining whether the vehicle speed is less than the vehicle speed threshold, specifically:
when the vehicle speed is less than the vehicle speed threshold, the step of determining the first sub-result comprises:
determining whether the other body part is in contact with the steering wheel;
determining whether the hands are in contact with the rim; and
determining whether the area of contact is greater than the preset area threshold; and
when the vehicle speed is equal to or greater than the vehicle speed threshold, the step of determining the first sub-result comprises determining whether the area of contact is greater than the preset area threshold, wherein:
   the first sub-result indicates hands-on when the area of contact is greater than the preset area threshold, and the first sub-result indicates hands-off when the area of contact is less than or equal to the preset area threshold.

According to an embodiment of the present invention, the step of determining the final result comprises:
determining the final result as hands-on if the first sub-result indicates hands-on and the second sub-result indicates hands-on;
determining the final result as hands-on if the first sub-result indicates hands-on and the second sub-result indicates hands-off;
determining the final result as hands-off if the first sub-result indicates hands-off and the second sub-result indicates hands-on; and
determining the final result as hands-off if the first sub-result indicates hands-off and the second sub-result indicates hands-off.

According to an embodiment of the present invention, the step of determining the second sub-result comprises:
establishing a steering system model, and on the basis of the torque information and the steering system model, calculating an estimated torque at a steering wheel end; and
determining whether the estimated torque is greater than a preset torque threshold, determining the second sub-result as hands-on when the estimated torque is greater than the preset torque threshold, and determining the second sub-result as hands-off when the estimated torque is less than or equal to the preset torque threshold.

According to an embodiment of the present invention, a hands-off detection device for a steering wheel is provided, comprising:
a memory, configured to store instructions; and
a processor, configured to read the instructions to perform the method according to the embodiments of the present invention.

According to an embodiment of the present invention, a computer-readable storage medium is provided, the computer-readable storage medium stores program code, and when the program code is run on a computer, the computer is caused to perform the method according to the embodiments of the present invention.

According to the hands-off detection method for a steering wheel of the present invention, whether the hands are off the steering wheel is determined on the basis of both torque information and image information. That is, dual verification is performed for hands-off detection of the steering wheel. Therefore, erroneous determinations of hands-off detection can be reduced, the accuracy of hands-off detection can be improved, and driving safety can be ensured.

### BRIEF DESCRIPTION OF THE DRAWINGS

FIG. 1 shows a flowchart of a hands-off detection method for a steering wheel according to Embodiment 1 of the present invention;
FIG. 2 shows a flowchart of a hands-off detection method for a steering wheel according to Embodiment 2 of the present invention; and
FIG. 3 shows a data flow diagram of a hands-off detection method for a steering wheel according to an embodiment of the present invention.

### DETAILED DESCRIPTION OF PREFERRED EMBODIMENTS

The concept of the present invention will be described more fully below with reference to the accompanying drawings. In this specification, certain embodiments of the concept of the present invention are illustrated. However, the concept of the present invention may be embodied in many different forms and is not to be construed as limited to the embodiments set forth herein.

In the present invention, the terms "first" and "second" are used to describe various devices, but are not intended to be limiting. These terms are merely used to distinguish one device from another.

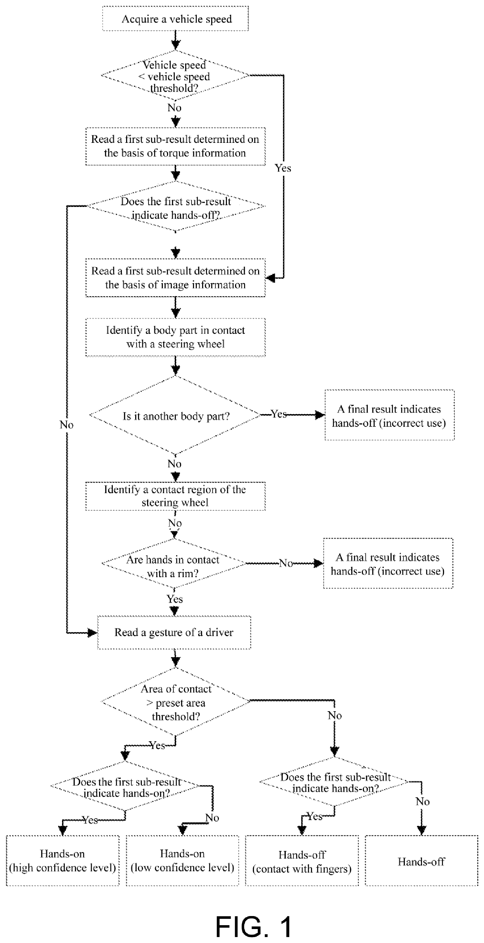

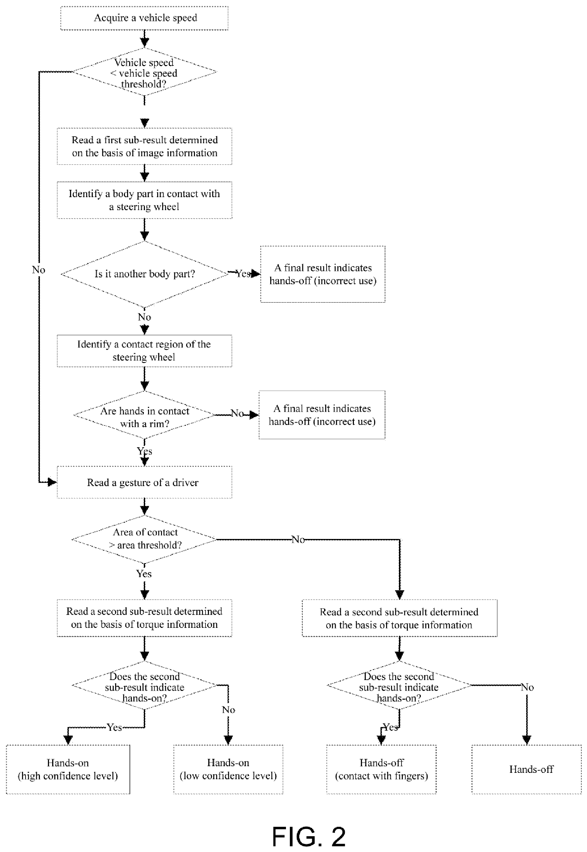

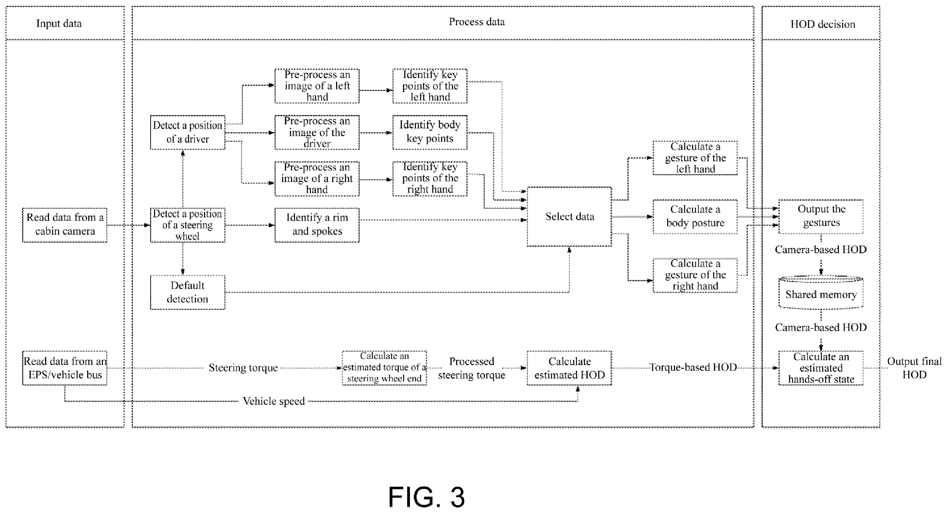

FIG. 1 shows a flowchart of a hands-off detection method for a steering wheel according to an embodiment of the present invention; FIG. 2 shows a flowchart of a hands-off detection method for a steering wheel according to another embodiment of the present invention; and FIG. 3 shows a data flow diagram of a hands-off detection method for a steering wheel according to an embodiment of the present invention. As shown in FIG. 1 to FIG. 3, the hands-off detection method for a steering wheel includes: acquiring torque information related to the steering wheel; and acquiring image information related to the steering wheel and a driver.

The torque information is information related to torsion of the steering wheel. For example, the torque information may be obtained from a torque sensor of a steering system of a vehicle, or may be obtained from a bus of the vehicle. The torque sensor may be various types of torque sensors and can detect a magnitude of torque applied to the steering wheel.

The image information is information related to images of the steering wheel and the driver. For example, the image information may be acquired from one or more cameras mounted to the vehicle. The camera is a device for capturing an image of the driver seated in a driver's seat, and may be, for example, a visible light camera, an infrared camera, or the like. The camera may be mounted in an area where limbs of the driver and the steering wheel can be captured, for example, near a front windshield, on an A-pillar, on a cabin ceiling, or the like.

The image information related to the driver may include information related to images of a right hand, a left hand, and a body of the driver. After the image of the driver is acquired, the images of the left hand, the right hand, and the body of the driver are processed, and key points of the left hand, the right hand, and the body of the driver are identified. The image information related to the steering wheel may include information related to images of a rim and spokes of the steering wheel. After the image information related to the steering wheel is acquired, the rim and the spokes of the steering wheel are identified. The key points are fused with the image information of the spokes and the rim of the steering wheel, and a left-hand gesture, a right-hand gesture, and a body posture are calculated.

### Embodiment 1

As shown in FIG. 1, a hands-off detection method further includes: on the basis of torque information, determining a first sub-result indicating whether hands are off a steering wheel; when the first sub-result indicates hands-off and when the first sub-result indicates hands-on, on the basis of image information, separately determining a second sub-result indicating whether the hands are off the steering wheel; and on the basis of the first sub-result and the second sub-result, determining a final result indicating whether the hands are off the steering wheel.

According to the hands-off detection method for a steering wheel of the present invention, whether the hands are off the steering wheel is determined on the basis of both torque information and image information. That is, dual verification is performed for hands-off detection of the steering wheel. The hands-off detection based on the image information is easily affected by unstable illumination. The detection based on the torque information is not affected by the illumination, thereby overcoming the defect of performing the hands-off detection based on the image information. When detected objects spatially overlap, the hands-off detection based on the image information may interpret the overlap as physical contact, leading to an erroneous determination that the hands of the driver are on the steering wheel. The detection based on the torque information overcomes this drawback. The detection based on the torque information may not identify a body part of the driver. Thus, when the body part of the driver other than the hands contacts the steering wheel, the detection based on the torque information may erroneously determine that the hands of the driver are in contact with the steering wheel, and the detection based on the image information may overcome this drawback. In summary, the hands-off detection method according to the present invention can reduce erroneous determinations of the hands-off detection and improve the accuracy of the hands-off detection, thereby ensuring the driving safety.

The step of determining the first sub-result based on the torque information includes: establishing a steering system model, and on the basis of the torque information and the steering system model calculating an estimated torque at a steering wheel end. The steering system model may include a steering column module, a steering torsion bar module, and a steering gear module.

The step of determining the first sub-result based on the torque information further includes: determining whether the estimated torque is greater than a preset torque threshold. When the estimated torque is greater than the preset torque threshold, the first sub-result indicates hands-on. In this case, the driver applies sufficient torque to the steering wheel. When the estimated torque is less than or equal to the preset torque threshold, the first sub-result indicates hands-off. In this case, the driver does not apply sufficient torque to the steering wheel.

The step of determining the second sub-result based on the image information includes at least one of the following steps: determining whether another body part of the driver other than the hands is in contact with the steering wheel; determining whether the hands are in contact with the rim; and determining whether the area of contact between the hands and the rim is greater than a preset area threshold.

In an embodiment, when the first sub-result indicates hands-off, the step of determining the second sub-result includes: determining whether another body part of the driver other than the hands is in contact with the steering wheel; determining whether the hands are in contact with the rim; and determining whether the area of contact between the hands and the rim is greater than a preset area threshold.

Specifically, when it is determined that the other body part is in contact with the steering wheel, the final result indicates hands-off. For example, the other body part may be knees, elbows, or the like of the driver. In this case, the driver may contact the steering wheel by using the knees, the elbows, or the like. That is, the driver uses the steering wheel by mistake. In this case, a warning is given to the driver to urge the driver to drive in a correct manner.

When it is determined that no other body part is in contact with the steering wheel, whether the hands are in contact with the rim of the steering wheel is determined. If the hands are not in contact with the rim, the final result indicates hands-off. In this case, the hands of the driver may contact a hub of the steering wheel, that is, the driver uses the steering wheel by mistake. In this case, a warning is given to the driver to urge the driver to drive in a correct manner.

When it is determined that the hands are in contact with the rim, whether the area of contact between the hands and the rim is greater than the preset area threshold is determined. When it is determined that the area of contact is less than or equal to the preset area threshold, the second sub-result indicates hands-off. In this case, the driver may be in contact with the steering wheel only with fingers. When it is determined that the area of contact is greater than the preset area threshold, the second sub-result indicates hands-on.

When the first sub-result indicates hands-on, the step of determining the second sub-result includes: determining whether the area of contact between the hands and the rim is greater than the preset area threshold. When it is determined that the area of contact is less than or equal to the preset area threshold, the second sub-result indicates hands-off. In this case, the driver may be in contact with the steering wheel only with fingers. When it is determined that the area of contact is greater than the preset area threshold, the second sub-result indicates hands-on.

The step of determining the final result indicating whether the hands are off the steering wheel on the basis of the first sub-result and the second sub-result includes:
if the first sub-result indicates hands-on and the second sub-result indicates hands-on (that is, the area of contact is greater than the preset area threshold), determining the final result as hands-on, and in this case, the final result has a high confidence level;
if the first sub-result indicates hands-on and the second sub-result indicates hands-off (that is, the area of contact is less than or equal to the preset area threshold), determining that the final result as hands-off, and the fingers of the driver may be in contact with the steering wheel in this case;
if the first sub-result indicates hands-off and the second sub-result indicates hands-on (that is, the area of contact is greater than the preset area threshold), determining that the final result as hands-on, and in this case, the final result has a low confidence level; and
if the first sub-result indicates hands-off and the second sub-result indicates hands-off (that is, the area of contact is less than or equal to the preset area threshold), determining that the final result as hands-off.

The hands-off detection method further includes acquiring a vehicle speed and determining whether the vehicle speed is less than a vehicle speed threshold. When the vehicle speed is less than the vehicle speed threshold, the step of determining the first sub-result based on the torque information is skipped, and the process proceeds to the step of determining the second sub-result based on the image information. When the vehicle speed is equal to or greater than the vehicle speed threshold, the process proceeds to the step of determining the first sub-result based on the torque information.

The step of determining the second sub-result further includes: identifying a body part in contact with the steering wheel; and after the body part is identified, determining whether another body part of the driver other than the hands is in contact with the steering wheel. The step of determining the second sub-result further includes: identifying a contact region of the steering wheel, and after identifying the contact region, determining whether the hands are in contact with the rim. The step of determining the second sub-result further includes: reading a gesture of the driver, and after reading the gesture of the driver, determining whether the area of contact is greater than the preset area threshold.

### Embodiment 2

As shown in FIG. 2, a hands-off detection method further includes: on the basis of image information, determining a first sub-result indicating whether hands are off a steering wheel; when the first sub-result indicates hands-off and when the first sub-result indicates hands-on, on the basis of torque information, separately determining a second sub-result indicating whether the hands are off the steering wheel; and on the basis of the first sub-result and the second sub-result, determining a final result indicating whether the hands are off the steering wheel.

According to the hands-off detection method for a steering wheel of the present invention, whether the hands are off the steering wheel is determined on the basis of both torque information and image information. That is, dual verification is performed for hands-off detection of the steering wheel. The hands-off detection based on the image information is easily affected by unstable illumination. The detection based on the torque information is not affected by the illumination, thereby overcoming the defect of performing the hands-off detection based on the image information. When detected objects spatially overlap, the hands-off detection based on the image information may interpret the overlap as physical contact, leading to an erroneous determination that the hands of the driver are on the steering wheel. The detection based on the torque information overcomes this drawback. The detection based on the torque information may not identify a body part of the driver. Thus, when the body part of the driver other than the hands contacts the steering wheel, the detection based on the torque information may erroneously determine that the hands of the driver are in contact with the steering wheel, and the detection based on the image information may overcome this drawback. In summary, the hands-off detection method according to the present invention can reduce erroneous determinations of the hands-off detection and improve the accuracy of the hands-off detection, thereby ensuring the driving safety.

The step of determining the first sub-result based on the image information includes at least one of the following steps: determining whether another body part of the driver other than the hands is in contact with the steering wheel; determining whether the hands are in contact with the rim; and determining whether the area of contact between the hands and the rim is greater than a preset area threshold.

The hands-off detection method further includes acquiring a vehicle speed and determining whether the vehicle speed is less than a vehicle speed threshold.

When the vehicle speed is less than the vehicle speed threshold, the step of determining the first sub-result includes: determining whether another body part of the driver other than the hands is in contact with the steering wheel; determining whether the hands are in contact with the rim; and determining whether the area of contact between the hands and the rim is greater than a preset area threshold.

Specifically, when it is determined that the other body part is in contact with the steering wheel, the final result indicates hands-off. For example, the other body part may be knees, elbows, or the like of the driver. In this case, the driver may contact the steering wheel by using the knees, elbows, or the like, that is, the driver may use the steering wheel by mistake. In this case, a warning is given to the driver to urge the driver to drive in a correct manner.

When it is determined that no other body part is in contact with the steering wheel, whether the hands are in contact with the rim of the steering wheel is determined. If the hands are not in contact with the rim, the final result indicates hands-off. In this case, the hands of the driver may contact a hub of the steering wheel, that is, the driver uses the steering wheel by mistake. In this case, a warning is given to the driver to urge the driver to drive in a correct manner.

When it is determined that the hands are in contact with the rim, whether the area of contact between the hands and the rim is greater than the preset area threshold is determined. When it is determined that the area of contact is less than or equal to the preset area threshold, the first sub-result indicates hands-off. In this case, the driver may be in contact with the steering wheel only with fingers. When it is determined that the area of contact is greater than the preset area threshold, the first sub-result indicates hands-on.

When the vehicle speed is equal to or greater than the vehicle speed threshold, the step of determining the first sub-result includes: determining whether the area of contact is greater than the preset area threshold. When it is determined that the area of contact is less than or equal to the preset area threshold, the first sub-result indicates hands-off. In this case, the driver may be in contact with the steering wheel only with fingers. When it is determined that the area of contact is greater than the preset area threshold, the first sub-result indicates hands-on.

The step of determining the final result indicating whether the hands are off the steering wheel on the basis of the first sub-result and the second sub-result includes:
If the first sub-result indicates hands-on (that is, the area of contact is greater than the preset area threshold) and the second sub-result indicates hands-on, the final result indicates hands-on, and in this case, the final result has a high confidence level.
If the first sub-result indicates hands-on (that is, the area of contact is greater than the preset area threshold) and the second sub-result indicates hands-off, the final result indicates hands-on, and in this case, the final result has a low confidence level.
If the first sub-result indicates hands-off (that is, the area of contact is less than or equal to the preset area threshold) and the second sub-result indicates hands-on, the final result indicates hands-off, and the fingers of the driver may be in contact with the steering wheel in this case.
If the first sub-result indicates hands-off (that is, the area of contact is less than or equal to the preset area threshold) and the second sub-result indicates hands-off, the final result indicates hands-off.

The step of determining the first sub-result further includes: identifying a body part in contact with the steering wheel; and after the body part is identified, determining whether another body part of the driver other than the hands is in contact with the steering wheel. The step of determining the first sub-result further includes: identifying a contact region of the steering wheel, and after identifying the contact region, determining whether the hands are in contact with the rim. The step of determining the first sub-result further includes: reading a gesture of the driver, and after reading the gesture of the driver, determining whether the area of contact is greater than the preset area threshold.

The step of determining the second sub-result based on the torque information includes: establishing a steering system model, and on the basis of the torque information and the steering system model, calculating an estimated torque at a steering wheel end. The steering system model may include a steering column module, a steering torsion bar module, and a steering gear module.

The step of determining the second sub-result based on the torque information further includes: determining whether the estimated torque is greater than a preset torque threshold. When the estimated torque is greater than the preset torque threshold, the second sub-result indicates hands-on. In this case, the driver applies sufficient torque to the steering wheel. When the estimated torque is less than or equal to the preset torque threshold, the second sub-result indicates hands-off. In this case, the driver does not apply sufficient torque to the steering wheel.

The hands-off detection method further includes providing an alert or notification to the driver that the driver needs to properly hold the steering wheel. In some cases, the alert or notification may include an audio or visual cue or signal.

An embodiment of the present invention further provides a hands-off detection device for a steering wheel. The hands-off detection device includes a memory and a processor. The memory is configured to store instructions. The processor is configured to read the instructions to perform the hands-off detection method for a steering wheel provided according to the embodiments of the present invention. The processor may be a central processing unit (CPU), or may be another general-purpose processor, a digital signal processor (DSP), an application specific integrated circuit (ASIC), a field-programmable gate array (FPGA), or other programmable logic device, a discrete gate or transistor logic device, a discrete hardware component, or the like.

An embodiment of the present invention further provides a computer-readable storage medium. The computer-readable storage medium stores program code, and when the program code is run on a computer, the computer is caused to perform steps in the hands-off detection method for a steering wheel provided according to the embodiments of the present invention. The computer-readable storage medium may include any entity or device capable of carrying computer program code, a recording medium, a universal serial bus (USB) flash drive, a removable hard disk, a magnetic disk, an optical disk, a computer memory, a read only memory (ROM), a random access memory (RAM), a software distribution medium, or the like. The computer program includes the computer program code. The computer program code may be in the form of source code, object code, an executable file, or some intermediate form, or the like.

Any process or method description described herein may be understood as representing a module, segment, or portion of code that includes one or more executable instructions for implementing a specific logical function or process step. It is to be understood that the embodiments of the present invention may be performed not in the order described, but in a substantially simultaneous manner or in a reverse order, depending on the functions involved.

Those of ordinary skill in the art may realize that the units and algorithm steps of the instances described in connection with the embodiments disclosed herein may be implemented in electronic hardware, computer software, or a combination of the two. To clearly illustrate the interchangeability of hardware and software, the composition and steps of each instance have been generally described in terms of functionality in the above description. Whether these functions are performed by hardware or by software depends on the specific application and design constraints of the technical solution. A person skilled in the art may use different methods to implement the described functions for each particular application, but it is not to be considered that the implementation goes beyond the scope of the present invention.

## Claims

1. A hands-off detection method for a steering wheel, comprising:
acquiring first information, the first information being one of torque information related to the steering wheel and image information related to the steering wheel and a driver;
acquiring second information, the second information being the other one of the torque information and the image information;
on the basis of the first information, determining a first sub-result indicating whether hands are off the steering wheel;
when the first sub-result indicates hands-off and when the first sub-result indicates hands-on, on the basis of the second information, separately determining a second sub-result indicating whether the hands are off the steering wheel; and
on the basis of the first sub-result and the second sub-result, determining a final result indicating whether the hands are off the steering wheel.

2. The hands-off detection method according to claim 1, wherein the first information is the torque information, the second information is the image information, and the step of determining the first sub-result comprises:
establishing a steering system model, and on the basis of the torque information and the steering system model, calculating an estimated torque at a steering wheel end; and
determining whether the estimated torque is greater than a preset torque threshold, the first sub-result indicating hands-on when the estimated torque is greater than the preset torque threshold, and the first sub-result indicating hands-off when the estimated torque is less than or equal to the preset torque threshold.

3. The hands-off detection method according to claim 2, wherein the step of determining the second sub-result comprises at least one of the following steps:
determining whether another body part of the driver other than the hands is in contact with the steering wheel;
determining whether the hands are in contact with a rim of the steering wheel; and
determining whether the area of contact between the hands and the rim is greater than a preset area threshold.

4. The hands-off detection method according to claim 3, wherein when the first sub-result indicates hands-off, the step of determining the second sub-result comprises:
determining whether the other body part is in contact with the steering wheel;
determining whether the hands are in contact with the rim; and
determining whether the area of contact is greater than the preset area threshold; and
when the first sub-result indicates hands-on, the step of determining the second sub-result comprises determining whether the area of contact is greater than the preset area threshold, wherein,
the second sub-result indicates hands-on when the area of contact is greater than the preset area threshold, and the second sub-result indicates hands-off when the area of contact is less than or equal to the preset area threshold.

5. The hands-off detection method according to claim 4, wherein the step of determining the final result comprises:
determining the final result as hands-on if the first sub-result indicates hands-on and the second sub-result indicates hands-on;
determining the final result as hands-off if the first sub-result indicates hands-on and the second sub-result indicates hands-off;
determining the final result as hands-on if the first sub-result indicates hands-off and the second sub-result indicates hands-on; and
determining the final result as hands-off if the first sub-result indicates hands-off and the second sub-result indicates hands-off.

6. The hands-off detection method according to any one of claims 2 to 5, further comprising:
acquiring a vehicle speed; and
determining whether the vehicle speed is less than a preset vehicle speed threshold, and skipping the step of determining the first sub-result on the basis of the torque information if the vehicle speed is less than the preset vehicle speed threshold.

7. The hands-off detection method according to claim 1, wherein the first information is the image information, the second information is the torque information, and the step of determining the first sub-result comprises at least one of the following steps:
determining whether another body part of the driver other than the hands is in contact with the steering wheel;
determining whether the hands are in contact with a rim of the steering wheel; and
determining whether the area of contact between the hands and the rim is greater than a preset area threshold.

8. The hands-off detection method according to claim 7, further comprising acquiring a vehicle speed and determining whether the vehicle speed is less than a vehicle speed threshold, wherein
when the vehicle speed is less than the vehicle speed threshold, the step of determining the first sub-result comprises:
determining whether the other body part is in contact with the steering wheel;
determining whether the hands are in contact with the rim; and
determining whether the area of contact is greater than the preset area threshold; and
when the vehicle speed is equal to or greater than the vehicle speed threshold, the step of determining the first sub-result comprises determining whether the area of contact is greater than the preset area threshold, wherein,
the first sub-result indicates hands-on when the area of contact is greater than the preset area threshold, and the first sub-result indicates hands-off when the area of contact is less than or equal to the preset area threshold.

9. The hands-off detection method according to claim 8, wherein the step of determining the final result comprises:
determining the final result as hands-on if the first sub-result indicates hands-on and the second sub-result indicates hands-on;
determining the final result as hands-on if the first sub-result indicates hands-on and the second sub-result indicates hands-off;
determining the final result as hands-off if the first sub-result indicates hands-off and the second sub-result indicates hands-on; and
determining the final result as hands-off if the first sub-result indicates hands-off and the second sub-result indicates hands-off.

10. The hands-off detection method according to any one of claims 7 to 9, wherein the step of determining the second sub-result comprises:
establishing a steering system model, and on the basis of the torque information and the steering system model, calculating an estimated torque at a steering wheel end; and
determining whether the estimated torque is greater than a preset torque threshold, determining the second sub-result as hands-on when the estimated torque is greater than the preset torque threshold, and determining the second sub-result as hands-off when the estimated torque is less than or equal to the preset torque threshold.

11. A hands-off detection device for a steering wheel, comprising:
a memory, configured to store instructions; and
a processor, configured to read the instructions to perform the method according to any one of claims 1 to 10.

12. A computer-readable storage medium, wherein the computer-readable storage medium stores program code, and when the program code is run on a computer, the computer is caused to perform the method according to any one of claims 1 to 10.
